# EUROPÄISCHE PATENTANMELDUNG

(11) **EP 0 902 516 A2**
(43) Veröffentlichungstag der Anmeldung: **17.03.1999**
(21) Anmeldenummer: 98113764.9
(22) Anmeldetag: 23.07.1998
(51) Int. Cl.: H02H 3/33

(54) **Fehlerstromschutzschalter**

(30) Priorität: 11.09.1997 DE 19739822
(71) Anmelder: ABB PATENT GmbH, 68309 Mannheim (DE)
(72) Erfinder: Kahl, Walter Dipl.-Ing., 69190 Walldorf (DE)
(74) Vertreter: Miller, Toivo

(57) **Zusammenfassung**

Es wird ein Fehlerstromschutzschalter mit einer Kontaktstelle (10) in je wenigstens einem Phasen- und einem Neutralleiter (Netzleiter) (L, N) beschrieben der einen Summenstromwandler (11), durch den die Netzleiter (L, N) als Primärwicklung hindurchgeführt sind, eine Sekundärwicklung (12), eine mit der Sekundärwicklung (12) verbundene Energiespeicherschaltung (15), deren Ausgangssignal einem einen Permanentmagneten (26) aufweisenden Auslöser (16) zugeführt wird, und ein Schaltschloß (18) aufweist, das von dem Auslöser (16) entklinkt wird und zur bleibenden Öffnung der Kontaktstellen (10) dient. Die Energiespeicherschaltung (15) ist so bemessen, daß sie bei der zur Verfügungstellung des Sekundärstromes bei Auftreten eines Fehlerstromes eine maximale Energie zur Ansteuerung des Auslösers (16) abgibt, wobei die Energie ausreicht, den durch den Permanentmagneten (26) des Auslösers erzeugten Permanentmagnetfluß im Joch (24) praktisch vollständig aufzuheben.

## Beschreibung

Die Erfindung betrifft einen Fehlerstromschutzschalter gemäß dem Oberbegriff des Anspruches 1.

Ein derartiger Fehlerstromschutzschalter mit einer Energiespeicherschaltung ist an sich bekannt. Im Prinzip lädt die Sekundärwicklung einen Kondensator auf, der über einen Schwellwertschalter bei einer gewissen vorbestimmten Aufladung seine Energie über ein Ausloserelais abgibt, das ein Schaltschloß entklinkt, wodurch in dem Netz befindliche Kontaktstellen bleibend geöffnet werden.

Die Auslöserelais werden in der Fertigung auf einen bestimmten gerätespezifischen Ansprechwert einjustiert, wobei das Auslöserelais ein Magnetjoch, einen Permanentmagneten und einen mittels einer Feder auf Öffnung belasteten Klappanker aufweist; das Joch ist weiterhin von einer Wicklung umgeben, die bei Auftreten eines Fehlerstromes innerhalb des Joches einen dem Permanentmagnetfluß entgegengesetzten Magnetfluß erzeugt, so daß die Anzugskraft für den Klappanker verringert wird und die Feder den Klappanker aufschwenken kann. Dadurch wird das Schaltschloß entklinkt.

Bei Anliegen eines Fehlerstromes kommt es also bei dieser Art Auslöser zu einer teilweisen Flußkompensation, so daß die Federkraft der Auslösefeder die magnetische Haltekraft durch den Permanentmagnet überwiegt. Durch Anwendungsfehler, z. B. keine Betätigung der Prüftaste, Verwendung unter unzulässigen Umweltbedingungen, kann es dazu kommen, daß ein Auslöserelais zu spät oder überhaupt nicht öffnet.

Aufgabe der Erfindung ist es, einen Fehlerstromschutzschalter zu schaffen, bei dem die Verfügbarkeit sehr hoch ist und die bei den bekannten Fehlerstromschutzschalter auftretenden möglichen Nichtauslösungen vermeidet bzw. deren Anzahl verringert.

Diese Aufgabe wird erfindungsgemäß dadurch gelöst, daß die Energiespeicherschaltung so bemessen ist, daß sie bei der zur Verfügungstellung des Sekundärstromes bei Auftreten eines Fehlerstromes eine maximale Energie zur Ansteuerung des Auslösers abgibt, wobei die Energie ausreicht, den durch den Permanentmagneten des Auslöser erzeugten Permanentmagnetfluß praktisch vollständig aufzuheben.

Dabei ist ggf. auch die Feder so zu bemessen, daß sie bei Auslösen und Abfall des magnetischen Flusses den Klappanker ggf. auch bei Kleben des Klappankers öffnet.

Die Bereitstellung des Stromes zur Flußkompensation durch die Spule am Auslöser erfolgt durch die Speicherelektronik, die im Gegensatz zu bekannten Elektroniken für z. B. selektive oder G-Schalter nicht auf die Einhaltung bestimmter Zeitverzögerungen dimensioniert ist, sondern auf die Speicherung einer möglichst großen Energie zur Auslösung. Dadurch wird bei Überschreiten des Geräteansprechwertes, der kleiner ist als der Bemessungsfehlerstrom, immer unabhängig von der Größe des Fehlerstromes mit einem maximal möglichen Auslösestrom durch das Relais ausgelöst. Die Ansprechwerte der Geräte werden dann unabhängig von den äußeren Randbedingungen des Auslöserelais, wie z. B. Feuchte oder Alterung.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert werden.

Es zeigen:
- Fig. 1: eine schematische Darstellung eines Fehlerstromschutzschalters mit Energiespeicherschaltung, und
- Fig. 2: ein Auslöserelais, wie es bei dem Fehlerstromschutzschalter gemäß Fig. 1 angewendet wird.

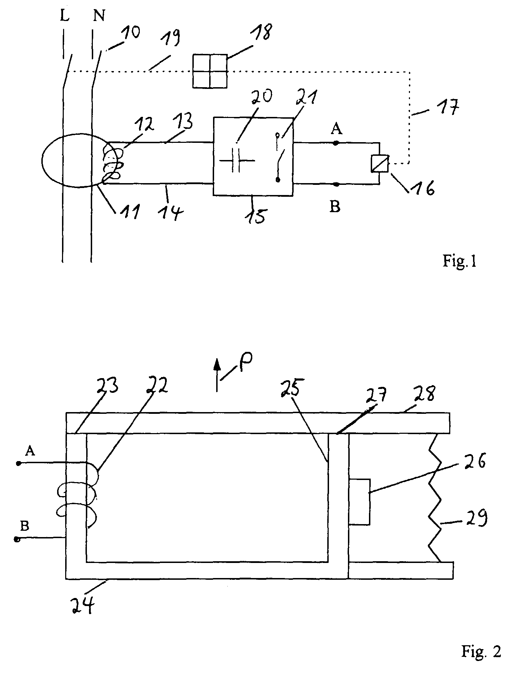

Mit der Fehlerstromschutzschaltung bzw. dem Fehlerstromschutzschalter gemäß Fig. 1 soll der Schutzpegel eines Netzes mit einem Phasenleiter und einem Neutralleiter erhöht werden. Der Phasenleiter L und der Neutralleiter N besitzen eine Kontaktstelle 10 und beide Leiter L und N werden durch einen Summenstromwandler 11 in Form eines Ringes hindurchgeführt, um den herum außerdem eine Sekundärwicklung 12 gewickelt ist. Die beiden Enden 13 und 14 der Sekundärwicklung werden einer Energiespeicherschaltung 15 zugeführt, an deren Ausgangsklemmen A und B ein Auslöserelais 16 angeordnet ist. Das Auslöserelais wirkt über eine Wirklinie 17 auf die Verklinkungsstelle (nicht gezeigt) eines Schaltschlosses 18 und dieses wiederum über eine Wirklinie 19 auf die Kontaktstellen 10.

Die Energiespeicherschaltung besitzt im Prinzip einen Speicherkondensator 20, der bei Überschreiten eines bestimmten Ladezustandes einen Schwellwertschalter 21 durchschaltet, so daß das Auslöserelais mit Energie versorgt wird. An den Anschlußklemmen A und B befindet sich eine Auslösewicklung 22, die um einen Schenke 23 eines Magnetjoches 24 herumgewickelt ist; am anderen Schenkel 25 ist ein Permanentmagnet 26 angeordnet, und das Schenkelende 27 des Schenkels 25 ist als Drehlager für einen Klappanker 28 ausgebildet, dessen anderes Ende das Schenkelende des Schenkels 23 überdeckt. Der Anker 28 ist mittels einer Feder 29 dauernd in Richtung Öffnen, also in Pfeilrichtung P, geöffnet, und über einen nicht gezeichneten Stößel, der sich ebenfalls in Pfeilrichtung P bewegt, wird die Verklinkungsstelle im Schaltschloß 18 geöffnet.

Die Speicherschaltung 15 mit dem Kondensator 20 und dem Schwellenwertschalter 21 ist so bemessen, daß sie eine maximal mögliche Energie oder eine möglichst große Energie an die Auslösewicklung 22 abgibt. Diese Auslöseenergie ist so bemessen, daß sie einen Magnetfluß im Joch 24 erzeugt, der absolut dem Permanentmagnetfluß des Permanentmagneten 26 gleicht; da die beiden Magnetflüsse entgegengesetzt gerichtet sind, fällt der Gesamtmagnetfluß im Joch 24 auf Null ab, so daß die Feder 29 den Klappanker in Pfeilrichtung P um das Drehlager 27 verschwenken kann. Die Feder ist dabei so zu bemessen, daß der Klappanker 28 im fehlerstromfreien Zustand noch von dem Schenkel 23 angezogen wird, jedoch dann, wenn der Gesamtmagnetfluß innerhalb des Joches 24 zu Null wird, auch dann den Klappanker öffnet, wenn beispielsweise im Bereich des Schenkelendes des Schenkels 23 und des Klappankers 28 Adhäsionen durch Umwelteinflüsse bzw. andere Randbedingungen entstehen. Die Feder 29 bricht dann den Klappanker immer auf.

## Patentansprüche

1. Fehlerstromschutzschalter mit einer Kontaktstelle in je wenigstens einem Phasenleiter und einem Neutralleiter (Netzleiter) (L, N), mit einem Summenstromwandler, durch den die Netzleiter als Primärwicklung hindurchgeführt sind, mit einer Sekundärwicklung, mit einer mit der Sekundärwicklung verbundenen Energiespeicherschaltung, deren Ausgangssignal einem einen Permanentmagneten aufweisenden Auslöser zugeführt wird, und mit einem Schaltschloß, das von dem Auslöser entklinkt wird und zur bleibenden Öffnung der Kontaktstellen dient, dadurch gekennzeichnet, daß die Energiespeicherschaltung (15) so bemessen ist, daß sie bei der zur Verfügungstellung des Sekundärstromes bei Auftreten eines Fehlerstromes eine maximale Energie zur Ansteuerung des Auslösers (16) abgibt, wobei die Energie ausreicht, den durch den Permanentmagneten (26) des Auslösers erzeugten Permanentmagnetfluß im Joch (24) praktisch vollständig aufzuheben.

2. Fehlerstromschutzschalter nach Anspruch 1, mit einer Feder zur Öffnung des Klappankers, dadurch gekennzeichnet, daß die Feder (29) so bemessen ist, daß sie bei Auslösung und Abfall des Magnetflusses im Joch (24) den Klappanker auch bei Adhäsion des Klappankers öffnet.
